(19) Europäisches Patentamt
European Patent Office
Office européen des brevets

(11) EP 2 388 758 A1

(12) DEMANDE DE BREVET EUROPEEN

(43) Date de publication:
23.11.2011 Bulletin 2011/47

(51) Int Cl.:
*G08G 3/00* (2006.01)   *H04B 7/185* (2006.01)

(21) Numéro de dépôt: 11166733.3

(22) Date de dépôt: 19.05.2011

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 21.05.2010 FR 1002155

(71) Demandeur: Thales
92200 Neuilly Sur Seine (FR)

(72) Inventeur: Bardout, Yves
31400 Toulouse (FR)

(74) Mandataire: Brunelli, Gérald et al
Marks & Clerk France
Immeuble Visium
22, avenue Aristide Briand
94117 Arcueil Cedex (FR)

(54) **Système de télécommunication par satellite comportant un mécanisme de séparation de messages émis par une pluralité d'émetteurs**

(57)   L'invention a pour objet un système de télécommunications par satellite comprenant au moins un satellite recevant des signaux en provenance d'une pluralité d'émetteurs présents dans une zone de surveillance appelée tâche, la transmission des signaux par les émetteurs étant discontinue et organisée en slots temporels, le satellite comportant un réseau d'antennes de réception (321), un ensemble de filtres numériques de réception (307) étant associé à chaque antenne. Le satellite comporte des moyens pour séparer les signaux en provenance de différents émetteurs et entrant en collision dans un même slot, ladite séparation étant réalisée par adaptation des coefficients des filtres numériques de réception (306), lesdits coefficients étant déduits de prédictions de la position des émetteurs (309).

FIG.3

**EP 2 388 758 A1**

**Description**

L'invention concerne un système de télécommunication par satellite comportant un mécanisme de séparation de messages émis par une pluralité d'émetteurs. Elle s'applique notamment aux domaines des systèmes d'identification tels que l'AIS, acronyme venant de l'expression anglo-saxonne « Automatic Identification System ».

Dans un système de communications par satellites recevant des signaux en provenance d'une pluralité émetteurs distincts, les performances de réception dépendent notamment de la capacité à séparer lesdits signaux afin de pouvoir en extraire le message, les données numériques transportées. Le multiplexage des signaux en temps, fréquence et code est le propre des technologies TDMA, acronyme venant de l'expression anglo-saxonne « Time Division Multiple Access », FDMA acronyme venant de l'expression anglo-saxonne « Frequency Division Multiple Access », ou CDMA acronyme venant de l'expression anglo-saxonne « Code Division Multiple Access ». Les techniques de diversité spatiale peuvent également être utilisées, notamment et sont particulièrement efficaces en cas de transmission de signaux émis par une pluralité d'émetteurs de positions différentes.

Dans les systèmes de surveillance maritime par satellite, par exemple de type AIS, l'émission de messages est organisée automatiquement dans des cellules d'environ 25 miles nautiques. La réception en orbite pour une tâche de diamètre 2500 miles nautiques implique que le satellite doive gérer simultanément près de dix mille cellules. De plus, certaines zones sont particulièrement actives en transmission du fait qu'un grand nombre d'émetteurs y est présent. Il est donc nécessaire que le satellite ait la capacité de recevoir une pluralité de signaux incidents distincts. Cette problématique est essentielle pour ce que concerne la réception satellitaire ou aéroportée de signaux non coordonnés, lesdits signaux étant émis par exemple par des émetteurs se déplaçant sur terre ou sur mer.

La position relative de l'émetteur par rapport au récepteur influe sur la réception du signal, en particulier sur la phase, sur le délai et sur le décalage Doppler. Cette position relative est habituellement exprimée en utilisant des coordonnées en azimut, élévation et distance. Un traitement se basant sur une réception des signaux sur plusieurs antennes et prenant en compte la phase, le délai et le décalage Doppler permet une séparation des signaux en provenance de plusieurs émetteurs même si ces derniers sont en collision, c'est-à-dire s'ils sont reçus simultanément dans un même domaine fréquentiel. Ainsi, il est possible par traitement de renforcer ou d'éliminer la contribution de certains signaux par rapport à d'autres, et donc ainsi d'améliorer la séparation. Le type de traitement choisi est essentiel pour obtenir une séparation maximale des signaux incidents et améliorer l'efficacité du système de transmission, notamment en termes d'économie de bande passante.

Afin d'optimiser la capacité de séparation du système des solutions de l'état de la technique peuvent être mises en oeuvre. Ainsi, il est possible d'utiliser des antennes directives au niveau du récepteur satellite, d'augmenter le nombre d'antennes de réception, d'augmenter le nombre de satellites dans la constellation et d'appliquer des algorithmes de suppression d'interférences.

A titre d'exemple, l'utilisation d'une antenne directive fixe ou à balayage en utilisant des techniques de formation de faisceau analogique, en anglais « beamforming », permet de réduire le nombre de messages reçus simultanément pour une tâche donnée. Cette solution a pour inconvénient une diminution de couverture entraînant une durée de revisite plus longue ou bien nécessitant un nombre important d'antennes et/ou de satellites.

Il est aussi possible d'utiliser des traitements numériques et/ou analogiques s'appuyant sur des réseaux d'antennes positionnés au niveau du satellite permettant une séparation des signaux reçus appelée séparation spatiale dans la suite de la description.

La séparation spatiale fait habituellement appel à des techniques à base de systèmes d'antennes, comme par exemple les systèmes SRFF, acronyme venant de l'expression anglo-saxonne « Single Reflector Focal Feed », les systèmes DRAF, acronyme venant de l'expression anglo-saxonne « Dual Reflector Antenna Feed », et d'autres systèmes à flux de réseaux incluant des éléments de types patch, hélix, monopole ou dipôle.

A ces systèmes d'antennes sont associés des traitements numériques. Ainsi, la solution de référence appelée Filtrage Adaptatif Spatial (FAS) se base sur l'utilisation d'un réseau d'antennes en émission directe associé à un traitement numérique de formation de faisceau « digital beamforming » en anglais.

Les technologies de filtrage adaptatif regroupent un ensemble de techniques telles que :

- la méthode des moindres carrés, désigné par l'acronyme LMS venant de l'expression « Least Mean Square » et permettant une adaptation du récepteur sur un signal d'entrée connu tel qu'un code ou une séquence de conditionnement habituellement désignés par l'expression anglo-saxonne « training sequence » ;
- l'optimisation du rapport signal sur bruit pour permettre la suppression des lobes latéraux et les lobes multiples du spectre du signal reçu ;
- la détermination d'une table de poids pré-calculés appliqués aux signaux en provenance d'émetteurs dont la position est connue ;
- l'utilisation de rayons rétro-directifs, le principe étant de former un rayon directif vers les émetteurs reçus ;
- l'utilisation de diagramme généralisé basé sur l'inversion de la matrice de covariance représentative de l'état du canal de transmission.

Dans des systèmes de communication par satellite recevant des signaux en provenance d'une pluralité d'émetteurs, la problématique est de séparer des messages long de plusieurs millisecondes, par exemple 26 ms, et contrairement aux signaux transmis sous forme d'impulsions qui possèdent une séparation temporelle intrinsèque, il est requis d'obtenir une séparation spatiale de signaux émis et se recouvrant en réception.

Un but de l'invention est notamment de pallier les inconvénients précités.

A cet effet l'invention a pour objet un système de télécommunications par satellite comprenant au moins un satellite recevant des signaux en provenance d'une pluralité d'émetteurs présents dans une zone de surveillance appelée tâche, la transmission des signaux par les émetteurs étant discontinue et organisée en slots temporels, le satellite comportant un réseau d'antennes de réception, un ensemble de filtres numériques de réception étant associé à chaque antenne. Le satellite comporte des moyens pour séparer les signaux en provenance de différents émetteurs et entrant en collision dans un même slot, ladite séparation étant réalisée par adaptation des coefficients des filtres numériques de réception, lesdits coefficients étant déduits de prédictions de la position des émetteurs.

Dans un mode de réalisation, les émetteurs transmettent des messages comportant des informations indiquant au moins leurs positions, ces informations étant mémorisées dans une ou plusieurs bases de données historique.

Une base de données historique est, par exemple, localisée dans le satellite.

Une base de données historique est, par exemple, localisée dans une station au sol.

Selon un mode de réalisation, les positions des émetteurs à un instant donné sont prédites en utilisant le contenu de la base de données historique, le modèle utilisé pour la prédiction prenant en compte la position des émetteurs à un instant donné ainsi que leur visibilité par le réseau d'antenne embarqué sur le satellite.

Selon un aspect de l'invention, pour une direction et une vélocité donnée d'un émetteur, la position d'un émetteur $P_{est}(t)$ à l'instant t est estimée à l'instant t en utilisant l'expression suivante :

$$P_{est}(t) = P(t_0) + \vec{d}(t - t_0)v$$

dans laquelle :

$P(t_0)$ représente la position connue acquise lors de la dernière observation de l'émetteur par le satellite à l'instant $t_0$ ;
$\vec{d}(t-t_0)$ représente la direction de l'émetteur pendant l'intervalle de temps $t-t_0$ ;
v représente la vélocité de l'émetteur.

Selon un autre aspect de l'invention, l'erreur de prédiction $\varepsilon$ est estimée en utilisant une expression telle que :

$$\varepsilon = \Delta d(t - t_0)v + (t - t_0)\Delta v$$

dans laquelle :

$\Delta d$ représente la précision angulaire de direction ;
$\Delta v$ la précision de vélocité.

La position prédite des émetteurs est, par exemple, ajustée en utilisant des techniques d'ajustement de trajectoire en projetant la position estimée $P_{est}(t)$ d'un émetteur sur une route R, ladite route étant représentée par une courbe.

Les positions prédites des émetteurs sont, par exemple, mémorisées dans une base de données embarquée dans le satellite.

Dans un mode de réalisation, des paramètres élévation et azimut représentatifs des signaux incidents tels que reçus au niveau des différentes antennes du réseau d'antenne du satellite sont déduits des positions relatives des émetteurs par rapport au satellite.

Le satellite balaie, par exemple, à l'aide d'un faisceau de réception la tâche associée au satellite, un lobe étroit du diagramme d'antenne étant déterminé de manière à être dirigé en priorité vers la ou les cases de la tâche ayant une faible densité de collision, le choix de ces cases étant déduit des résultats de l'analyse des bases de données historique.

Dans un autre mode de réalisation, les poids des filtres sont déterminés de manière à ajuster M zéros du diagramme d'antenne suivant les directions de M signaux interférents sélectionnés, lesdits signaux interférents étant sélectionnés sur la base d'une estimation du niveau nuisance en terme d'interférence comparé à une valeur seuil prédéterminée, ledit niveau de nuisance étant déduit de la puissance reçue et du décalage doppler estimés pour un signal interférent donné.

Les poids des filtres sont ajustés, par exemple, sur les signaux incidents en provenance d'émetteurs sélectionnés dont la séparation spatiale est supérieure au pas de directivité du système d'antenne.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de traitements de réception pouvant être mis en oeuvre en réception par un satellite ;
- la figure 2 représente un satellite ainsi que sa zone de couverture ;
- la figure 3 donne un exemple de mise en oeuvre selon l'invention de traitements permettant de séparer des signaux en provenance d'une pluralité de sources.

L'invention concerne un système de télécommunications comprenant au moins un satellite et une pluralité d'émetteurs émettant en direction du satellite. La transmission des signaux par les émetteurs est organisée en périodes temporelles, lesdites périodes étant appelées slots ou slots de transmission dans la suite de la description.

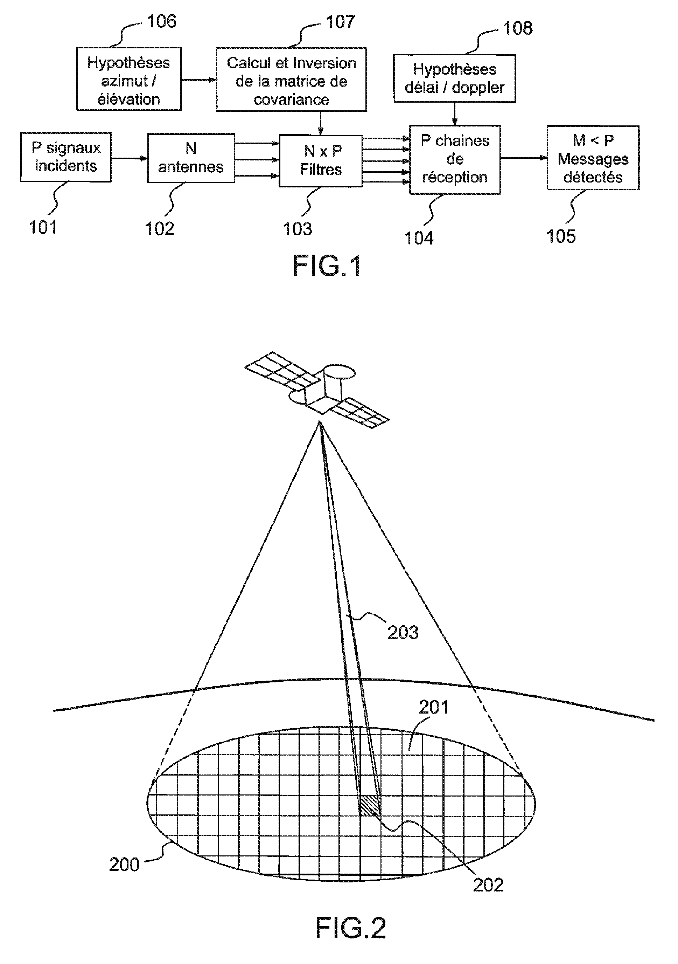

La figure 1 donne un exemple de traitements pouvant être mis en oeuvre en réception par un satellite du système. Un tel satellite comporte par exemple N antennes de réception 102 et a la capacité de traiter pour un slot P parmi S signaux incidents 101, c'est-à-dire P signaux en provenance de P émetteurs distincts. Pour un slot donné, un traitement numérique basé sur un diagramme généralisé peut être mis en oeuvre et prend en entrée les N signaux tels que reçus au niveau des N antennes 102 après numérisation et applique P filtres numériques pour chacun de ces N signaux 103, les coefficients de filtrage pouvant être différents pour chaque filtre. Les coefficients de ces filtres sont déterminés de manière à séparer les P signaux incidents reçus dans un même slot. La technique FAS utilisant un diagramme généralisé se base sur l'estimation et l'inversion d'une matrice de corrélation représentative du canal de transmission 107 pour un nombre choisi de P signaux incidents et pour chacune des P sorties sur lesquelles est détaché du bruit un des signaux à isoler. L'estimation de la matrice de covariance et donc le calcul des coefficients des N filtres dépend d'hypothèses prises quant à la direction d'arrivée 106 des P signaux incidents, représentées par exemple par des paramètres d'élévation et d'azimut.

L'algorithme de diagramme généralisé mentionné précédemment se base sur l'inversion de la matrice de covariance, décrit dans de nombreuses publications, ou le vecteur W des poids est déterminé en utilisant l'expression suivante :

$$\mathrm{W} = \mathrm{M}^{-1} \times \mathrm{W}_0 \qquad\qquad (1)$$

dans laquelle :

$\mathrm{M}^{-1}$ représente l'inverse de la matrice de covariance du bruit et des interférences ;
$\mathrm{W}_0$ représente le vecteur dont les composantes sont les poids optimaux à appliquer en l'absence d'interférences.

Après application des N×P filtres numériques 103, au moins P chaines de réception 104 permettent de traiter les P signaux incidents de manière à démoduler et décoder le message numérique porté par ces derniers. Des hypothèses quant au décalage Doppler et au délai de réception 108 peuvent être prises en compte pour améliorer ces traitements. Avantageusement, des hypothèses 106 concernant la position des émetteurs peuvent être utilisées pour déterminer finement la matrice de covariance et en déduire les coefficients de filtrage 107.

Des techniques d'adaptation par rétroaction de type LMS sont également applicables par slot.

Ce type de traitements s'applique à tout système de communications satellitaires comprenant au moins un satellite recevant des signaux en provenance d'une pluralité d'émetteurs, lesdits émetteurs étant embarqués par exemple sur des bateaux ou des véhicules terrestres dont les émissions ne sont pas coordonnées, c'est-à-dire que les émetteurs ne sont pas synchronisés précisément les uns par rapport aux autres, les émissions pouvant arriver décalées temporellement au niveau du ou des récepteurs du système. Dans des systèmes comme par exemple l'AIS, le multiplexage des signaux émis par les différents émetteurs se base sur un multiplexage temporel des émissions par slot et un multiplexage fréquentiel des émissions sur plusieurs canaux. La mise en oeuvre de ces multiplexages n'est pas suffisante pour éviter des collisions entre signaux provenant de plusieurs sources distinctes et pour pouvoir récupérer au niveau du récepteur satellite l'information transmise, c'est-à-dire les différents messages numériques.

La séparation des signaux mise en oeuvre dans le cadre de l'invention exploite notamment le principe de diversité spatiale. Le procédé selon l'invention sélectionne plusieurs messages parmi les messages reçus. Le but est de détecter entièrement ces messages, c'est-à-dire de récupérer l'ensemble des bits utiles, par exemple 84 bits par message. Dans un système de type selon l'invention, le même message peut être transmis plusieurs fois par un même émetteur terrestre pendant une période donnée de manière à introduire de la redondance temporelle et fiabiliser la transmission des messages. Un historique des transmissions de messages peut être utilisé afin de produire des statistiques de réception permettant de prédire l'arrivée des signaux incidents. Sur cette base, le procédé détermine les coefficients des filtres adaptatifs utilisés par le satellite en réception en réduisant les hypothèses quant à la position des émetteurs sur la base de méthodes de calcul.

Un exemple de mise en oeuvre est donné dans la suite de la description et fait appel à au moins un réseau d'antennes dont les phases sont contrôlées par un vecteur de poids, ledit vecteur étant déterminé par l'inversion de la matrice de covariance, les composantes vecteur de poids correspondant aux coefficients des filtres de réception.

La figure 2 représente un satellite ainsi que sa zone de couverture. La zone couverte 200 par un satellite est appelée tâche dans la suite de la description. Cette tâche 200 est habituellement associée à une grille de découpe 201, cette grille étant composée de cases 202 définies par des paramètres élévation/azimut permettant de diriger le faisceau de réception du satellite 203 vers celles-ci. Une case est dite dense si elle comprend un nombre important d'émetteurs et que les collisions de signaux en provenance desdits émetteurs sont fréquentes au niveau du satellite. Les cases denses correspondent par exemple aux routes maritimes ou zones denses. A titre d'exemple, la mer méditerranée peut être considérée comme une zone dense.

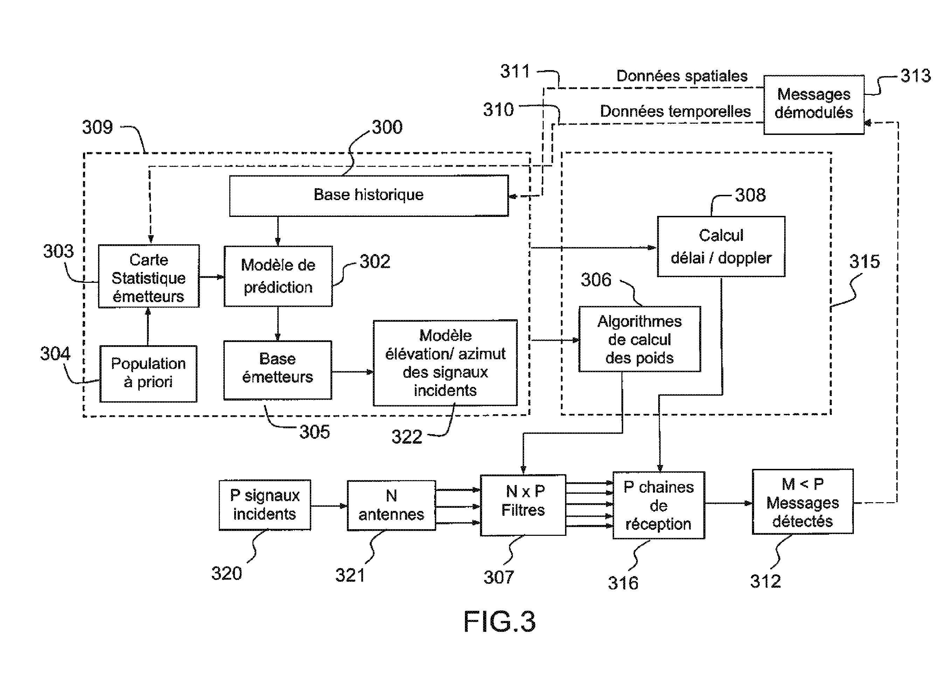

La figure 3 donne un exemple de mise en oeuvre selon l'invention de traitements permettant de séparer des signaux en provenance d'une pluralité de sources.

Le traitement en réception comprend plusieurs blocs de traitement permettant d'adapter les filtres de réception 307. Un premier bloc de traitements 309 correspond à l'acquisition de données et à leur analyse. Un second bloc de traitement 315 basé sur les résultats du premier traitement a pour objectif de déterminer les coefficients des $N \times P$ filtres de réception 307, lesdits filtres étant appliqués sur le signal reçu au niveau du satellite étant composé notamment de la combinaison de S signaux incidents 320 en provenance de S émetteurs distincts, ledit signal étant reçu sur N antennes 321.

Le premier bloc de traitement 309 correspond à une acquisition et une analyse de données. Dans un système tel que l'AIS, les différents émetteurs transmettent des signaux comportant des messages indiquant leur position ainsi que d'autres informations leur étant propre. De préférence, ces informations sont conservées avec d'autres information relatives aux satellites du système dans une base de données 300 globale au sol et/ou une base de donnée locale, c'est-à-dire localisée dans le satellite. Ces bases de données sont appelées dans la suite de la description bases de données historique. Les données mémorisées peuvent aussi s'étendre à des données autres que la position des émetteurs comme par exemple :

- l'identité des émetteurs ;
- la destination de l'émetteur ;
- le type et la mission du véhicule sur lequel est embarqué l'émetteur, par exemple le type de bateau (pêche, transport), le type de cargo ;
- la latitude, la longitude, la direction et la vélocité de l'émetteur ;
- le temps d'émission, le canal utilisé et la périodicité de l'émission ;
- la position du satellite en latitude, longitude, celle-ci pouvant être déduite en fonction du temps.

Un modèle prédictif 302 permettant d'estimer la position des émetteurs peut alors être appliqué en utilisant le contenu des bases de données historique 300 précédemment décrites. Ce modèle prend en compte la position des émetteurs à un instant donné ainsi que leur visibilité par le réseau d'antenne embarqué sur le satellite. La précision des données mémorisées étant décroissante avec le temps, une estimation de l'erreur de direction, de l'erreur de vélocité ainsi que de l'erreur liée aux changements possibles de direction des émetteurs peuvent être avantageusement pris en compte.

Ainsi, pour une direction et une vélocité donnée, la position $P_{est}(t)$ estimée à l'instant t d'un émetteur est par exemple estimée en utilisant l'expression suivante :

$$P_{est}(t) = P(t_0) + \vec{d}(t - t_0)v \qquad (2)$$

dans laquelle :

$P(t_0)$ représente la position connue acquise lors de la dernière observation de l'émetteur par le satellite ;

$\overline{d}$ représente la direction de l'émetteur pendant l'intervalle de temps t-$t_0$ ;
v représente la vélocité de l'émetteur.

L'erreur de prédiction ε peut être estimée en utilisant l'expression :

$$\varepsilon = \Delta d (t - t_0) v + (t - t_0) \Delta v \qquad\qquad (3)$$

dans laquelle :

Δd représente la précision angulaire de direction ;
Δv la précision de vélocité.

Ce modèle de prédiction 302 peut être amélioré en utilisant par exemple des techniques d'ajustement de trajectoire, notamment par correspondance avec des trajectoires ou positions mémorisées 303. Ces techniques sont habituellement désignées par l'expression anglo-saxonne « map-matching ». Des statistiques peuvent être associées à des cartes sur lesquelles apparaissent les positions usuelles des émetteurs 304 parcourant ces cartes et correspondant par exemples à des routes maritimes, des zones de pêche ou des zones d'exploitation.

Si R est une route unique intersectant un cercle d'incertitude noté C($P_{est}$(t),ε), ledit cercle étant centré sur la position estimée $P_{est}$(t) et ayant pour rayon la valeur ε de précision, la position corrigée par le modèle de prédiction est alors donnée par l'expression :

$$P_{corr}(t) = \mathrm{Pr}oj(P_{est}(t), R) \qquad\qquad (4)$$

dans laquelle :

Proj() représente une fonction de projection de la position $P_{est}$(t) sur la route R, ladite route étant représentée par une courbe.

Lorsque plusieurs routes sont candidates, la route utilisée pour l'estimation précédente est par exemple favorisée.
L'analyse 302 de l'historique de navigation est mémorisée 300 pour un émetteur donné ou des émetteurs appartenant à une classe d'émetteur, une classe d'émetteur correspondant à un type de véhicule sur lequel est embarqué l'émetteur. On peut ainsi distinguer des classes correspondant à des cargos ou chalutiers. Une analyse statistique de l'historique 302 peut aussi être utilisée pour caractériser le comportement des émetteurs. Des mesures du comportement des émetteurs peuvent être réalisées comme par exemple des mesures de la fréquence de changement de vélocité et de direction, des valeurs maximum de dérivée seconde caractérisant les limites d'accélération/décélération et de virage, leurs valeurs absolues cumulées par émetteur et par classe d'émetteurs. Ces données peuvent notamment être utilisées pour corriger l'estimation de position, par exemple en définissant les précisions de Δd et Δv pour un « map-matching » appliqué à un émetteur donné.

Le résultat de l'analyse statistique de l'historique 302 correspond par exemple à une base de données 305. Cette base contient notamment des prédictions relatives à la population d'émetteurs prédite à un temps donné. Cette base mémorise par exemple les positions de chaque émetteur et les associe à une case donnée. Cette base peut également contenir une mesure de la densité de chaque case, c'est-à-dire du nombre d'émetteurs par case.

Les données relatives à la position des émetteurs de la base de données 305 résultants de l'analyse prédictive 302 peuvent être avantageusement utilisées pour caractériser 322 les signaux incidents en provenance des différents émetteurs identifiés. Ainsi il est possible de déduire de la position relative des émetteurs par rapport aux satellites des paramètres élévation et azimut associés auxdits signaux.

Le second bloc de traitement 315 basé sur les résultats du premier bloc traitement 309 a pour objectif de déterminer les coefficients des filtres N×P de réception.

Avantageusement, le procédé améliore la séparation de messages en collision au niveau du satellite en utilisant une ou plusieurs techniques décrites ci-après parmi lesquelles le pointage spatial, l'élimination d'interférences et le suivi prédictif des émetteurs.

Comme explicité précédemment, les émetteurs du système émettent leurs messages dans un slot de transmission. A partir de ces périodes d'émission, il est possible de comparer les messages effectivement captés par le satellite avec les émissions prédites et de conserver une mesure de détection effective des messages reçus de chaque émetteur.

Trois types de techniques 306 pouvant être mis en oeuvre sont décrits dans la suite de la description, lesdits traitements permettant de calculer les poids, l'invention pouvant être étendu à d'autres techniques.

Une première technique 306 pouvant être mise en oeuvre dans le cadre de l'invention est d'utiliser un traitement par balayage intelligent faisceau étroit. Basé sur les données relatives à la position des émetteurs 305 et/ou aux signaux incidents 322, l'algorithme choisit une ou plusieurs cases sous la tâche de l'antenne et y dirige un lobe étroit afin d'y détecter l'un des signaux prédits. Les signaux en sortie de filtre 307 correspondent alors aux signaux émis dans ces cases. La détermination des coefficients des filtres à partir d'une position d'émetteur connu fait partie des connaissances générales de l'homme du métier. Un exemple d'une telle détermination est décrit dans le livre de Robert J. Mailloux intitulé Phased Array Antenna Handbook, paragraphe 3.3.3, second edition, Artech House Antennas and Propagation Library.

Pour une position du satellite donnée, le procédé selon l'invention classe, par exemple par ordre de priorité, les émetteurs selon leurs coordonnées azimut/élévation. Les émetteurs de priorité haute sont ceux appartenant à une case pour laquelle la densité de collision est faible, la densité de collision correspondant au nombre moyen de signaux transportant des messages en provenance d'émetteurs différents et entrant en collision dans un même slot. C'est par conséquent pour ces émetteurs que la probabilité de détection obtenue en réception sera la plus élevée. Ainsi, les cases ayant une faible densité de collision sont sélectionnées en priorité lors du balayage répété de la tâche par le faisceau de réception du satellite. Cette sélection de cases est effectuée en s'appuyant sur le résultat d'analyse 309 mémorisé 305, 322.

Dans le cas où plusieurs réseaux d'antennes sont disponibles dans le système, lesdits réseaux d'antenne étant répartis sur un ou plusieurs satellites, les cases composant la zone à couvrir par le satellite peuvent être avantageusement réparties entre les réseaux d'antennes qui les voient. A titre d'exemple, dans un système s'appuyant sur une constellation de satellites, plusieurs satellites peuvent passer au dessus d'une même zone présentant une densité de collision importante. Le traitement des messages en provenance des différents émetteurs présents dans la zone à couvrir par le système peut être réparti dans le temps et entre les différents satellites de la constellation de manière à utiliser la totalité de la puissance de calcul disponible.

Une seconde technique 306 pouvant être mise en oeuvre dans le cadre de l'invention pour améliorer la séparation des messages en collision est d'utiliser une méthode de suppression d'interférences multiples.

Afin de mettre en oeuvre la technique de suppression d'interférences multiples, M signaux interférents séparés spatialement par au moins une valeur correspondant au pas de directivité de l'antenne sont sélectionnés. Cette sélection se fait par exemple sur la base d'une estimation du niveau nuisance en termes d'interférence, ledit niveau correspondant à une puissance reçue et au décalage doppler estimé pour un signal interférent donné.

Les poids des filtres sont alors déterminés 307 de manière à amener les M zéros du diagramme d'antenne suivant les directions des signaux interférents sélectionnés. Ceci a pour effet d'améliorer le rapport signal sur interférence. Les poids du filtre peuvent être pré-calculés et préchargés dans une table sur les M interférents afin d'éviter le calcul par les équipements bords du satellite. Une telle technique est décrite notamment dans le livre de Robert J. Mailloux précédemment cité.

Une troisième technique 306 pouvant être mise en oeuvre dans le cadre de l'invention pour améliorer la séparation des messages en collision est d'utiliser une méthode mettant en oeuvre un suivi prédictif entrelacé. Comme il n'est possible de détecter qu'un nombre limité de P émetteurs par slot, il est avantageux de répartir sur l'ensemble des slots d'une période de suivi la recherche des émetteurs pour atteindre des probabilités de détection identique pour chaque émetteur. Pour une période de suivi longue, une période de suivi pouvant atteindre une heure, la prédiction peut-être inutilisable. Il faut alors fixer une période de suivi plus courte que le besoin utilisateur, afin de maintenir les données globales du système. La sélection des émetteurs recherchés sur un slot doit aussi assurer une séparation spatiale suffisante. Elle doit être supérieure au pas de directivité du système d'antenne, ceci afin d'augmenter la probabilité de détection.

Dans ce cas, une sélection d'au moins un des signaux incidents est réalisée, la détection de ce signal étant privilégiée.

L'approche de séparation spatiale est particulièrement nécessaire lorsqu'il y a un nombre S de signaux incidents supérieur à N, le nombre d'antennes, et deux modes de réalisation permettent de choisir les P émetteurs avec $P < N$ parmi les S incidents, sachant que la détection est sur une période de suivi longue, supérieure à la période de répétition des émetteurs: le choix par priorité décrit précédemment et l'entrelacement décrit ci-après. Dans les deux cas, le nombre d'émetteur visé à l'étape de détection est réduit à $P < N$.

Dans une période de suivi, on va marquer progressivement tous les émetteurs. Sur chaque slot, les P premiers émetteurs prédits non marqués sont visés par la détection, puis marqués. Ainsi ils ne seront plus visés dans la même période avant qu'une chance de détection ait été attribuée à chaque émetteur. Lorsque c'est le cas, les marques sont réinitialisées pour tous les émetteurs qui n'ont pas été détectés. Ainsi les émetteurs sont également répartis, c'est-à-dire entrelacés, sur tous les slots d'émission dans la période de suivi, jusqu'à leur détection.

L'adaptation 306 des poids des filtres de réception 307 est alors réalisée grâce à un suivi des émetteurs. La technique FAS en diagramme généralisé mentionnée précédemment dans la description est utilisée.

En sortie du traitement numérique de réseau phasé, la chaine de réception peut-être améliorée par l'utilisation des données 305, 322 résultant de l'acquisition et des analyses 309 décrite précédemment. Cette utilisation permet d'améliorer le calcul du délai de propagation et du décalage doppler 308 associé aux signaux incidents et aussi d'adapter la taille des fenêtres de fréquence et de temps à partir de la connaissance de position prédite des émetteurs. Cela contribue à améliorer la sensibilité des chaines de traitement après filtrage 316, et permet d'isoler les messages dont le contenu est utile 312 des interférents résiduels. Avantageusement, la synchronisation sur la porteuse d'un signal est facilité par le calcul du décalage Doppler, ledit décalage étant déduit des paramètres élévation et azimut de l'émetteur recherché. D'autre part, la synchronisation temporelle nécessaire à la démodulation, qui se fait par exemple en utilisant une séquence d'apprentissage est significativement accélérée.

Plusieurs signaux de rétroaction 310, 311 peuvent également être utilisés afin d'améliorer la séparation en réception. Ces signaux sont déterminés à partir des messages démodulés 313 en sortie des filtres de réception 307. Les données temporelles 310 et spatiales 311 contenues dans les messages démodulés 313 dans le slot courant permettent de mettre à jour respectivement les bases de données d'historique 300 et de statistiques de distribution des signaux reçus 303 et permettent de mesurer l'efficacité des algorithmes utilisés. Un exemple de mesure d'efficacité correspond par exemple au nombre de messages démodulés et décodés correctement pour un niveau donné de puissance en réception.

Ces signaux de rétroaction 310, 311 permettent notamment d'affiner les informations liées à la distribution des émetteurs 303 à partir des messages détectées. Ils permettent aussi de prédire la prochaine incidence du signal en provenance d'un émetteur donné.

Un système mettant en oeuvre le procédé selon l'invention peut utiliser un ou plusieurs algorithmes 306 de calcul de poids des filtres. La sélection de l'algorithme de calcul des poids des filtres de réception peut-être effectuée dynamiquement. Ladite sélection peut être effectuée au niveau de l'équipement récepteur d'un système d'antenne, c'est-à-dire à bord du satellite ou bien par un équipement distant, une station au sol par exemple.

Ainsi, le système peut appliquer par exemple une ou plusieurs des trois techniques décrites précédemment. Ainsi, celui-ci peut appliquer tout d'abord la première technique par balayage des cases denses pour initialiser les positions du plus grand nombre d'émetteurs puis réutiliser cette technique pour une mise à jour des bases de données historique 300. Ensuite, l'une des deux autres techniques décrites précédemment peut être utilisée pour déterminer quels sont les émetteurs non encore considérés.

## Revendications

1. Système de télécommunications par satellite comprenant au moins un satellite recevant des signaux en provenance d'une pluralité d'émetteurs présents dans une zone de surveillance appelée tâche, la transmission des signaux par les émetteurs étant discontinue et organisée en slots temporels, le satellite comportant un réseau d'antennes de réception (321), un ensemble de filtres numériques de réception (307) étant associé à chaque antenne, le système étant **caractérisé en ce que** le satellite comporte des moyens pour séparer les signaux en provenance de différents émetteurs et entrant en collision dans un même slot, ladite séparation étant réalisée par adaptation des coefficients des filtres numériques de réception (306), lesdits coefficients étant déduits de prédictions de la position des émetteurs (309), les positions des émetteurs à un instant donné étant prédites (302) en utilisant le contenu d'une base de données historique (300) comportant un historique de la position des émetteurs, le modèle utilisé pour la prédiction prenant en compte la position des émetteurs à un instant donné ainsi que leur visibilité par le réseau d'antenne embarqué sur le satellite.

2. Système selon la revendication 1 **caractérisé en ce que** les émetteurs transmettent des messages comportant des informations indiquant au moins leurs positions, ces informations étant mémorisées dans une ou plusieurs bases de données historique (300).

3. Système selon la revendication 2 **caractérisé en ce qu'**une base de données historique (300) est localisée dans le satellite.

4. Système selon l'une quelconque des revendications 2 ou 3 **caractérisé en ce qu'**une base de données historique (300) est localisée dans une station au sol.

5. Système selon l'une quelconque des revendications précédentes **caractérisé en ce que** pour une direction et une vélocité donnée d'un émetteur, sa position $P_{est}(t)$ à l'instant t est estimée à l'instant t en utilisant l'expression suivante :

$$P_{est}(t) = P(t_0) + \vec{d}(t - t_0)v$$

dans laquelle :

$P(t_0)$ représente la position connue acquise lors de la dernière observation de l'émetteur par le satellite à l'instant $t_0$ ;
$d(t-t_0)$ représente la direction de l'émetteur pendant l'intervalle de temps $t-t_0$ ;
v représente la vélocité de l'émetteur.

**6.** Système selon l'une quelconque des revendications **caractérisé en ce que** l'erreur de prédiction $\varepsilon$ est estimée en utilisant une expression telle que :

$$\varepsilon = \Delta d(t - t_0)v + (t - t_0)\Delta v$$

dans laquelle :

$\Delta d$ représente la précision angulaire de direction ;
$\Delta v$ la précision de vélocité.

**7.** Système selon l'un quelconque des revendications 5 ou 6 **caractérisé en ce que** la position prédite des émetteurs est ajustée en utilisant des techniques d'ajustement de trajectoire en projetant la position estimée $P_{est}(t)$ d'un émetteur sur une route R, ladite route étant représentée par une courbe.

**8.** Système selon l'une quelconque des revendications précédentes **caractérisé en ce que** les positions prédites des émetteurs sont mémorisées dans une base de données (305) embarquée dans le satellite.

**9.** Système selon l'une quelconque des revendications précédentes **caractérisé en ce que** des paramètres élévation et azimut représentatifs des signaux incidents tels que reçus au niveau des différentes antennes du réseau d'antenne du satellite sont déduits (322) des positions relatives des émetteurs par rapport au satellite.

**10.** Système selon l'une quelconque des revendications précédentes **caractérisé en ce que** le satellite balaie à l'aide d'un faisceau de réception la tâche associée au satellite (306), un lobe étroit du diagramme d'antenne étant déterminé de manière à être dirigé en priorité vers la ou les cases de la tâche ayant une faible densité de collision, le choix de ces cases étant déduit des résultats (305, 322) de l'analyse (309) des bases de données historique (300).

**11.** Système selon l'une quelconque des revendications précédentes **caractérisé en ce que** les poids des filtres sont déterminés (307) de manière à ajuster M zéros du diagramme d'antenne suivant les directions de M signaux interférents sélectionnés, lesdits signaux interférents étant sélectionnés sur la base d'une estimation du niveau nuisance en terme d'interférence comparé à une valeur seuil prédéterminée, ledit niveau de nuisance étant déduit de la puissance reçue et du décalage doppler estimés pour un signal interférent donné.

**12.** Système selon l'une quelconque des revendications précédentes **caractérisé en ce que** les poids des filtres sont ajustés sur les signaux incidents en provenance d'émetteurs sélectionnés dont la séparation spatiale est supérieure au pas de directivité du système d'antenne.

**13.** Système selon l'une quelconque des revendications précédentes **caractérisé en ce que** les poids des filtres sont déterminés sur chaque slot afin d'extraire certains des messages prédits dans ce slot, suivant un ordre de priorité défini dynamiquement, les priorités étant calculées sur la base de données historique afin d'atteindre les objectifs fixés de performance système.

**14.** Système selon l'une quelconque des revendications précédentes **caractérisé en ce que** les poids des filtres sont déterminés pour extraire un sous-ensemble des émetteurs prédits suivant la période de chacun, l'ensemble des émetteurs étant également répartis sur tous les slots d'émission dans la période de suivi, jusqu'à détection.

FIG.1

FIG.2

FIG.3

313 — Messages démodulés

Données spatiales
Données temporelles

315

308 — Calcul délai / doppler

306 — Algorithmes de calcul des poids

312 — M < P Messages détectés

316 — P chaines de réception

307 — N x P Filtres

311

310

300 — Base historique

302 — Modèle de prédiction

322 — Modèle élévation/ azimut des signaux incidents

305 — Base émetteurs

321 — N antennes

320 — P signaux incidents

309

303 — Carte Statistique émetteurs

304 — Population à priori

**EP 2 388 758 A1**

Europäisches
Patentamt
European
Patent Office
Office européen
des brevets

**RAPPORT DE RECHERCHE EUROPEENNE**

Numéro de la demande

EP 11 16 6733

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2001 077738 A (KDD CORP) 23 mars 2001 (2001-03-23) | 1,3,4,8, 9,11-13 | INV. G08G3/00 H04B7/185 |
| Y | * alinéa [0008] - alinéa [0017] * * figures 6,7 * ----- | 2 | |
| X | WO 01/65726 A1 (ICO SERVICES LTD [GB]; MULLINS DENNIS ROY [GB]) 7 septembre 2001 (2001-09-07) | 1,3,4,8, 9,11-13 | |
| Y | * page 10, ligne 20 - page 11, ligne 8 * * page 12, ligne 10 - ligne 21 * * page 16, ligne 8 - page 17, ligne 12 * * page 18, ligne 9 - ligne 12 * * page 20, ligne 3 - page 21, ligne 17 * * page 23, ligne 5 - ligne 9 * * figures 4,6 * ----- | 2 | |
| Y | HOLSTEN S: "Global maritime surveillance with satellite-based AIS", OCEANS 2009-EUROPE, 2009. OCEANS '09, IEEE, PISCATAWAY, NJ, USA, PAGE(S) 1 - 4 , 11 mai 2009 (2009-05-11), XP031540752, ISBN: 978-1-4244-2522-8 * Section I, "Introduction" * * Section VI, "Challenges" * ----- | 2 | DOMAINES TECHNIQUES RECHERCHES (IPC) G08G H04B |
| A | WO 00/59136 A1 (QUALCOMM INC [US]) 5 octobre 2000 (2000-10-05) * abrégé * * revendications 1,4 * ----- | 1-14 | |

Le présent rapport a été établi pour toutes les revendications

| Lieu de la recherche | Date d'achèvement de la recherche | Examinateur |
|---|---|---|
| Munich | 21 juillet 2011 | Draper, Alan |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons

................................................................

& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**

EP 11 16 6733

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-07-2011

| Document brevet cité<br>au rapport de recherche | | Date de<br>publication | Membre(s) de la<br>famille de brevet(s) | | Date de<br>publication |
|---|---|---|---|---|---|
| JP 2001077738 | A | 23-03-2001 | AUCUN | | |
| WO 0165726 | A1 | 07-09-2001 | AUCUN | | |
| WO 0059136 | A1 | 05-10-2000 | AT | 326796 T | 15-06-2006 |
| | | | AU | 769495 B2 | 29-01-2004 |
| | | | AU | 3931700 A | 16-10-2000 |
| | | | BR | 0009369 A | 20-04-2004 |
| | | | CA | 2368415 A1 | 05-10-2000 |
| | | | CN | 1352832 A | 05-06-2002 |
| | | | DE | 60028017 T2 | 21-12-2006 |
| | | | EP | 1163742 A1 | 19-12-2001 |
| | | | HK | 1044238 A1 | 22-07-2005 |
| | | | JP | 2003536283 U | 02-12-2003 |
| | | | MX | PA01009716 A | 30-09-2002 |
| | | | US | 6424831 B1 | 23-07-2002 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ROBERT J. MAILLOUX.** Phased Array Antenna Handbook. Artech House Antennas and Propagation Library